# EUROPÄISCHE PATENTANMELDUNG

(11) **EP 0 830 911 A1**
(43) Veröffentlichungstag der Anmeldung: **25.03.1998**
(21) Anmeldenummer: 97116251.6
(22) Anmeldetag: 18.09.1997
(51) Int. Cl.: B21K 21/08, B21D 22/02

(54) **Verfahren zum Herstellen von Pressteilen für Fahrzeuginsassen-Rückhaltesysteme**

(30) Priorität: 19.09.1996 DE 19638441
(71) Anmelder: TRW Occupant Restraint Systems GmbH, 73551 Alfdorf (DE)
(72) Erfinder: Wier, Franz, 73571 Göggingen (DE)
(74) Vertreter: Degwert, Hartmut, Dipl.-Phys.

(57) **Zusammenfassung**

Die Erfindung betrifft ein Verfahren zum Herstellen von Preßteilen (12; 13; 40; 60) für Fahrzeuginsassen-Rückhaltesysteme, bei dem ein durch Ablängen eines Rohres erhaltener Rohling (10) in eine Presse (14) eingelegt und in mindestens einem Preßschritt in die gewünschte Form gepreßt wird. Mit eines solchen Verfahren können verschiedenste Preßteile selbst bei komplexen Gestaltungen durch Umformen eines quasi standardisierten Rohlings, nämlich eines Rohrabschnittes, erzielt werden können.

## Beschreibung

Die Erfindung betrifft ein Verfahren zum Herstellen von Preßteilen für Fahrzeuginsassen-Rückhaltesysteme. Solche Preßteile können insbesondere als Kolben für Linearantriebe von Gurtstraffvorrichtungen sowie für verschiedene Beschlagteile verwendet werden, um ein Zugseil mit einem Kolben eines solchen Linearantriebs oder mit einem Gurtschloß bzw. einer fahrzeugfesten Stelle zu verbinden, wenn das Zugseil zum Befestigen des Gurtschlosses verwendet wird.

Solche Teile werden üblicherweise hergestellt, indem ein massiver Rohling zuerst von zwei Seiten geprägt wird, um den ausgesparten Innenraum des Teils vorzuformen, und indem anschließend der Rohling gestanzt wird, um die gewünschte Endform zu erhalten. Dieses Verfahren ist insgesamt sehr arbeitsaufwendig, da eine Vielzahl von Arbeitsschritten notwendig ist, um aus dem Rohling das gewünschte Teil zu erhalten.

Im Gegensatz dazu wird durch die Erfindung ein Verfahren zum Herstellen von Preßteilen für Fahrzeuginsassen-Rückhaltesysteme geschaffen, bei dem ein durch Ablangen eines Rohres erhaltener Rohling in eine Presse eingelegt und in mindestens einem Preßschritt in die gewünschte Form gepreßt wird. Dieses Verfahren beinhaltet wesentlich weniger Arbeitsschritte als herkömmliche Verfahren. Ein wesentlicher Unterschied zwischen dem erfindungsgemäßen Verfahren und einem herkömmlichen Verfahren besteht darin, daß bei dem erfindungsgemäßen Verfahren der Rohling bereits einen ausgesparten Innenraum aufweist, während bei herkömmlichen Verfahren erst das Material aus dem Innenraum des Rohlings entfernt werden muß. Somit entfallen bei dem erfindungsgemäßen Verfahren eine Vielzahl von Arbeitsschritten. Außerdem liegt dem erfindungsgemäßen Verfahren die für den Fachmann überraschende Erkenntnis zugrunde, daß verschiedenste Preßteile selbst bei komplexen Gestaltungen durch Umformen eines quasi standardisierten Rohlings, nämlich eines Rohrabschnittes, erzielt werden können. Im allgemeinen ist es ausreichend, für das Umformen des Rohlings in das Preßteil einen einzigen Preßschritt auszuführen, wie dies gemäß einer bevorzugten Ausführungsform des erfindungsgemäßen Verfahrens vorgesehen ist. In diesem Fall sind die verschiedenen Arbeitsschritte von herkömmlichen Verfahren, die auf verschiedenen Bearbeitungsmaschinen vorgenommen werden mußten, zu einem einzigen Schritt zusammengefaßt, woraus eine erhebliche Kostenreduzierung resultiert.

Gemäß einer bevorzugten Ausführungsform der Erfindung ist vorgesehen, daß vor dem Pressen des Rohlings ein Zugseil in diesen eingelegt wird. Auf diese Weise ist es möglich, ohne zusätzlichen Arbeitsschritt das Preßteil fest mit einem Zugseil zu verbinden. Dies ist insbesondere vorteilhaft, wenn das Preßteil ein Befestigungsteil zum Befestigen des Zugseils oder eine Anschlaghülse auf dem Zugseil ist. Es hat sich nämlich überraschenderweise herausgestellt, daß in einem einzigen Schritt ein Umformen eines aus einem Rohrabschnitt erhaltenen Rohlings in ein Preßteil und ein Aufpressen dieses Preßteils auf ein Zugseil durchgeführt werden kann.

Gemäß einer bevorzugten Ausführungsform der Erfindung ist vorgesehen, daß die Haltekraft des Preßteils auf dem Zugseil vor dem Entnehmen aus der Presse überprüft wird. Auf diese Weise läßt sich mit minimalem Aufwand eine größtmögliche Sicherheit erhalten.

Als vorteilhaft hat es sich herausgestellt, für den Rohling ein Material zu verwenden, dessen Festigkeit kleiner als die Festigkeit des Materials des Zugseils ist. In diesem Fall ergibt sich eine optimale Haltekraft des Preßteils auf dem Zugseil, ohne daß das Zugseil beim Aufpressen des Preßteils beschädigt werden kann.

Vorzugsweise ist vorgesehen, daß bei der Bemessung des Materialquerschnitts des Preßteils die bei der Umformung des Rohlings auftretende Kaltverfestigung des Materials berücksichtigt wird. Die Kaltverfestigung kann zu einer Festigkeitssteigerung von bis zu 60 % führen. Die Kaltverformung ist im allgemeinen abhängig vom jeweils vorliegenden Umformungsgrad. Ein größerer Umformungsgrad führt zu einer größeren Kaltverfestigung. Es bietet sich also an, in belasteten Bereichen des Preßteils einen höheren Umformungsgrad herbeizuführen, so daß die Festigkeitssteigerung aufgrund der Kaltverformung optimal genutzt werden kann.

Gemaß einer bevorzugten Ausführungsform der Erfindung wird als Material für den Rohling eine Aluminiumlegierung verwendet. Auf diese Weise wird eine besonders gute Umformbarkeit erhalten, und es treten keinerlei Korrisionsprobleme auf.

Gemäß einer bevorzugten anderen Ausführungsform ist vorgesehen, daß für den Rohling ein Stahl verwendet wird, der einen hohen Umformungsgrad ermöglicht. Dies bietet sich insbesondere dann an, wenn besonders hohe Anforderungen an die Festigkeit des Preßteils gestellt werden.

Wenn ein Rohling aus Stahl verwendet wird, ist vorzugsweise vorgesehen, daß dieser verzinkt ist. Ein Korrosionsschutzüberzug aus Zink hat nämlich den Vorteil, daß er zusammen mit dem Rohling umgeformt werden kann, ohne daß er sich ablöst. Weiterhin sind nicht mit Zink überzogene Bereiche des Preßteils bis zu einer gewissen Größe unkritisch, da aufgrund der Fernwirkung des diese Bereiche umgebenden Zinks diese ausreichend vor Korrosion geschützt sind.

Gemäß einer bevorzugten Ausführungsform der Erfindung ist vorgesehen, daß der Rohling durch Zusammenfahren eines Stempels und einer Matrize entlang der Längsrichtung des Rohlings umgeformt wird. Es hat sich nämlich herausgestellt, daß der Rohling in nahezu allen Fällen in einem einzigen Arbeitsschritt allein mit einer eindimensionalen und daher besonders einfach zu erzielenden Bewegung von zwei Werkzeugteilen relativ zueinander in das Preßteil umgeformt und gegebenenfalls auf das Zugseil aufgepreßt werden kann.

Weitere besondere Ausgestaltungen der Erfindung ergeben sich aus den Unteransprüchen.

Die Erfindung wird nachfolgend unter Bezugnahme auf verschiedene bevorzugte Ausführungsformen beschrieben, die in der Zeichnung dargestellt sind. In dieser zeigen:
- Fig. 1 einen Längsschnitt durch einen Rohling, der bei einem erfindungsgemäßen Verfahren verwendet wird;
- die Figuren 2 bis 5 schematisch vier Verfahrensschritte zum Herstellen eines Preßteils gemäß einer ersten bevorzugten Ausführungsform der Erfindung;
- Fig. 6 perspektivisch ein mit dem in den Figuren 2 bis 5 dargestellten Verfahren hergestelltes Preßteil;
- die Figuren 7 und 8 schematisch zwei Schritte eines erfindungsgemäßen Verfahrens zum Herstellen eines mit einem Zugseil verbundenen Preßteils gemäß einer zweiten Ausführungsform der Erfindung;

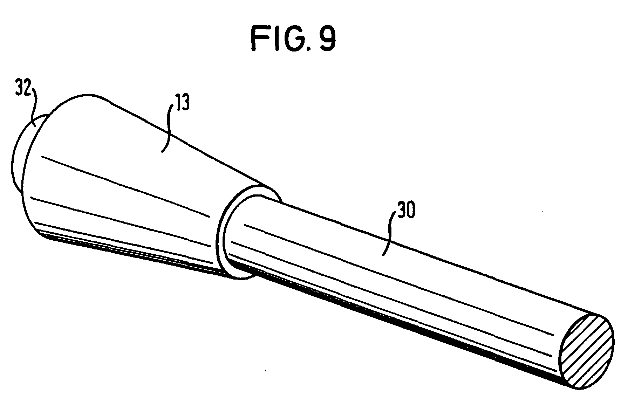

- Fig. 9 perspektivisch ein mit dem in den Figuren 7 und 8 dargestellten Verfahren hergestelltes Preßteil, das auf ein Zugseil aufgepreßt ist;
- die Figuren 10 bis 13 schematisch vier Schritte eines erfindungsgemäßen Verfahrens zum Herstellen eines mit einem Zugseil verpreßten Preßteils gemäß einer dritten Ausführungsform der Erfindung;
- Fig. 14 schematisch eine vorteilhafte Ausgestaltung eines erfindungsgemäßen Verfahrens; und
- Fig. 15 schematisch eine weitere vorteilhafte Ausgestaltung eines erfindungsgemäßen Verfahrens.

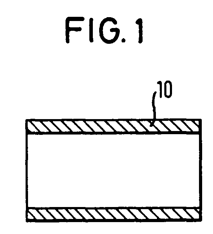

In Fig. 1 ist in einem Längsschnitt ein Rohling 10 dargestellt, der mit einem erfindungsgemäßen Verfahren in ein Preßteil umgeformt werden kann. Dieser Rohling 10 wird durch Ablängen eines (nicht dargestellten) Rohres erhalten, das vorzugsweise auf einer Vorratsrolle bereitgehalten wird. Dieses Rohr kann aus einer Aluminiumlegierung oder aus Stahl bestehen. Bei einem Rohr aus Stahl kann vorgesehen sein, daß dieses vergütet und/oder verzinkt ist.

Die speziellen Abmessungen des Rohres und des aus diesem erhaltenen Rohlings 10 sind an das jeweils zu erhaltende Preßteil angepaßt. Der wichtigste Parameter ist das Volumen des Rohlings 10, da dieses beim Umformen nahezu konstant bleibt. Jedoch können durch die Auswahl eines geeigneten Innendurchmessers, eines geeigneten Außendurchmessers und einer geeigneten Länge des Rohlings die zum Umformen des Rohlings 10 in ein Preßteil notwendige Umformkraft, die dazu notwendige Umformleistung sowie auch einige Eigenschaften des sich ergebenden Preßteils wesentlich beeinflußt werden. Wenn vorgesehen ist, daß das Preßteil zusammen mit dem Umformschritt auf ein Zugseil aufgepreßt wird, sollte der Innendurchmesser des Rohlings nur geringfügig größer als der Außendurchmesser des Zugseils sein.

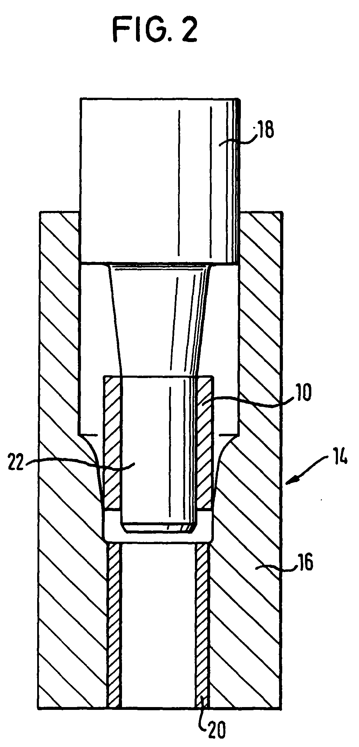

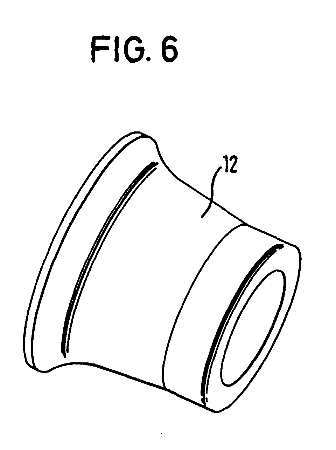

Es wird nun anhand der Figuren 2 bis 5 eine erste Ausführungsform eines erfindungsgemäßen Verfahrens beschrieben. Mit diesem Verfahren wird das in Fig. 6 dargestellte Preßteil 12 erhalten, das als Kolben für einen Linearantrieb verwendet werden kann. Für dieses Preßteil wurde beispielsweise ein Rohling verwendet, der einen Innendurchmesser von 9 mm, einen Außendurchmesser von knapp 12 mm und eine Länge von etwa 20 mm hatte.

Für das Umformen des Rohlings 10 in das Preßteil 12 wird eine Presse 14 verwendet, die im wesentlichen aus einer Matrize 16 und einem Stempel 18 besteht. Weiterhin ist im Inneren der Matrize 16 ein relativ zu dieser beweglicher Auswerfer 20 vorgesehen. In dem in Fig. 2 dargestellten ersten Schritt des erfindungsgemäßen Verfahrens wird der Rohling 10 in die Matrize 16 eingelegt. Anschließend wird der Stempel 18 in die Matrize 16 eingefahren, bis ein Stempelfortsatz 22, dessen Außendurchmesser geringfügig kleiner als der Innendurchmesser des Rohlings 10 ist, in diesen eingreift.

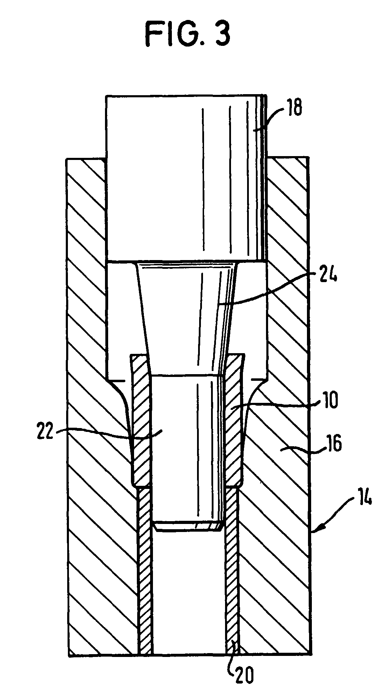

In einem in Fig. 3 dargestellten zweiten Schritt des erfindungsgemäßen Verfahrens wird der Stempel 18 weiter in die Matrize 16 hineingedrückt, wodurch der Rohling 10 zum einen in die Matrize 16 hineingedrückt wird, bis er an dem Auswerfer 20 anliegt, und zum anderen auf seinem entgegengesetzten axialen Ende geringförmig mittels eines sich an dem Stempelfortsatz 22 anschließenden Stempelkonus 24 aufgeweitet wird.

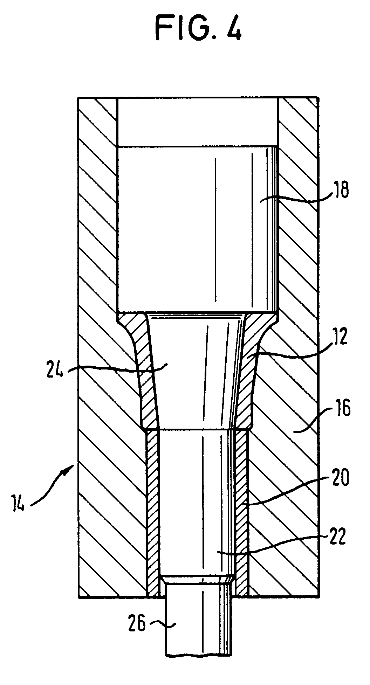

In Fig. 4 ist der dritte Schritt des erfindungsgemäßen Verfahrens dargestellt, bei dem der Stempel 18 vollständig in die Matrize 16 hineingedrückt wurde. Der Rohling 10 aus den Figuren 2 und 3 ist dadurch in die gewünschte Form gepreßt worden, so daß ein Preßteil 12 entstanden ist. Der Schritt 3 kann durch eine kraftabhängige oder durch eine wegabhängige Steuerung der Bewegung des Stempels 18 beendet werden. Es kann auch vorgesehen sein, einen in Fig. 4 dargestellten Anschlag 26 für den Stempel 18 zu verwenden.

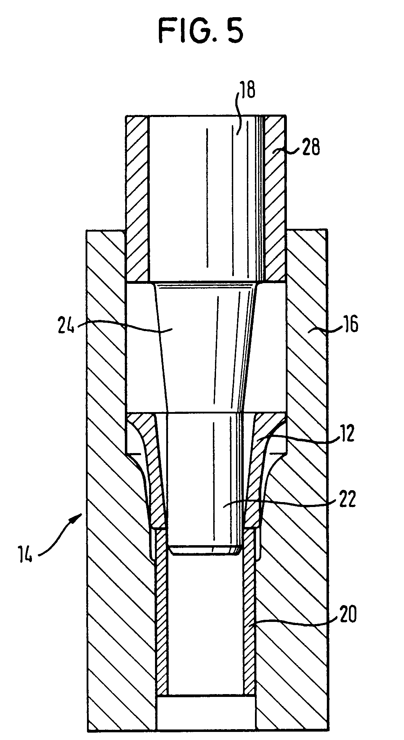

In Fig. 5 ist dargestellt, daß das Preßteil 12 mittels des Auswerfers 20 aus der Matrize 16 herausgedrückt wird. Falls es sich als notwendig herausstellt, kann am Stempel 18 ein in Fig. 5 schematisch dargestellter Auswerferring 28 vorgesehen sein, um das Preßteil 12 von dem Stempel 18 zu lösen.

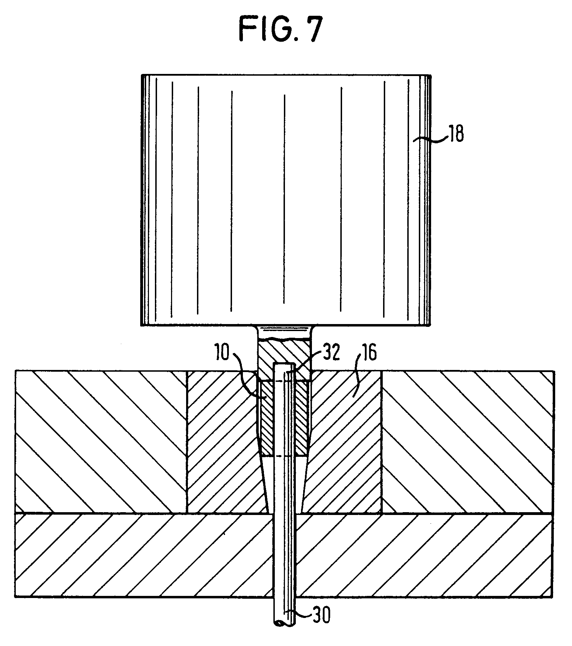

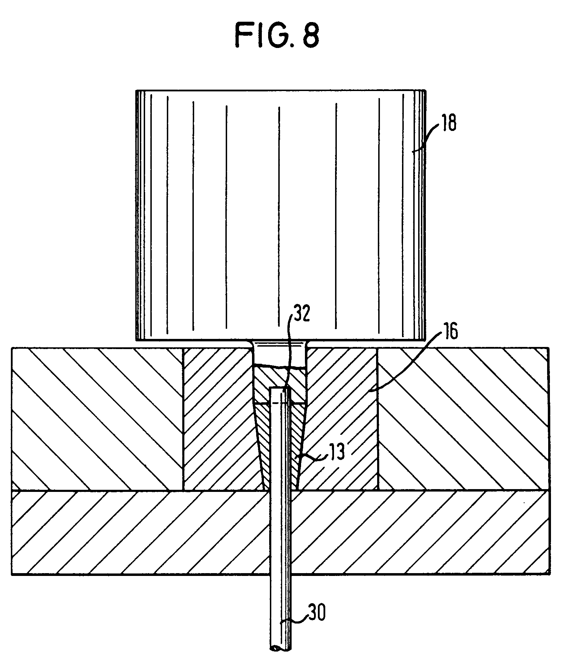

In den Figuren 7 und 8 ist schematisch ein erfindungsgemäßes Verfahren gemäß einer zweiten bevorzugten Ausführungsform dargestellt. Der wesentlichste Unterschied gegenüber der in den Figuren 2 bis 5 dargestellten ersten Ausführungsform eines erfindungsgemäßen Verfahrens besteht darin, daß in den Rohling 10 vor dem Umformen ein Zugseil 30 eingelegt wird. Durch den mittels des Stempels 18 auf den Rohling 10 ausgeübten Drucks entlang der Längsachse des Rohlings 10 wird dieser entsprechend der durch die Gestaltung des Stempels 18 und der Matrize 16 vorgegebenen Kontur umgeformt, während er gleichzeitig auf das entsprechende Ende des Zugseils 30 aufgepreßt wird. Bei dieser Ausführungsform kann das Preßteil insbesondere eine Anschlaghülse 13 auf dem Zugseil sein, beispielsweise für den in Fig. 6 dargestellten Kolben.

Vorzugsweise ist vorgesehen, daß das dem Preßteil zugeordnete Ende 32 des Zugseils 30 über das Preß- bzw. Anschlagteil 13 hinausragt. Dies führt zu einer Erhöhung der Haltekraft des Preßteils 13 auf dem Zugseil 30. Vorzugsweise ist weiterhin vorgesehen, daß vor dem Entnehmen des Zugseils und des Preßteils 13 aus der Matrize 16 die Haltekraft des Preßteils 13 auf dem Zugseil überprüft wird. Dies kann insbesondere dadurch geschehen, daß auf das aus der Matrize 16 herausragende freie Ende des Zugseils (in nicht dargestellter Weise) eine vorbestimmte Prüflast aufgebracht und gleichzeitig gemessen wird, ob es zu einer Relativbewegung zwischen dem Preßteil 13 und dem Zugseil 30 kommt.

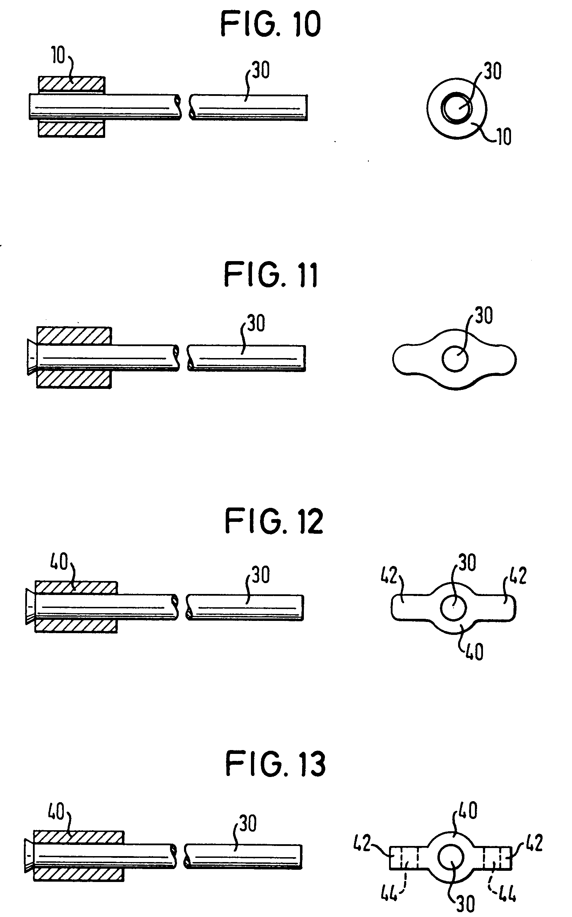

In den Figuren 10 bis 13 ist eine dritte Ausführungsform eines erfindungsgemäßen Verfahrens dargestellt. Bei dieser Ausführungsform wird der Rohling 10 in ein Befestigungsteil 40 umgeformt, das auf ein Zugseil 30 aufgepreßt ist. Dieses Befestigungsteil kann beispielsweise dazu verwendet werden, ein Gurtschloß an dem Zugseil 30 zu befestigen oder das Zugseil mit einem Fahrzeug zu verbinden.

Zum Umformen des Rohlings 10 in das Befestigungsteil 40 werden im Gegensatz zu den Verfahren gemäß der ersten und der zweiten Ausführungsform zwei Arbeitsschritte verwendet. Ausgehend von dem in Fig. 10 dargestellten Ausgangszustand des Rohlings 10 wird dieser zuerst mit einem Zwischenschritt in die in Fig. 11 dargestellte Form umgeformt und ausgehend von dieser Form in die in Fig. 12 dargestellte endgültige Form gebracht. Das Befestigungsteil 40 weist in der endgültigen Form zwei Anschlußlaschen 42 auf, die in einem Endbearbeitungsschritt jeweils mit einer Bohrung 44 versehen werden.

Bei der Umformung des Materials kommt es zu einer Kaltverfestigung und folglich zu einer Festigkeitssteigerung des Materials. Diese Festigkeitssteigerung ist umso größer, je höher der Umformungsgrad ist. Damit aus dem in Fig. 10 dargestellten rohrförmigen Rohling, dessen Wanddicke merklich größer als die Wanddicke des Rohlings bei der ersten und der zweiten Ausführungsform der Erfindung ist, das Befestigungsteil 40 mit dem beiden Anschlußlaschen 42 erhalten werden kann, ist im Bereich dieser Anschlußlaschen 42 ein besonders hoher Umformungsgrad notwendig. Folglich macht sich in diesem Bereich des Befestigungsteils 40 die Kaltverfestigung besonders bemerkbar. Diese kann daher bei der Dimensionierung des Rohlings 10 und des Befestigungsteils 40 berücksichtigt werden. Es ist bei gleicher Festigkeit ein geringerer Materialquerschnitt notwendig, als dies aufgrund der ursprünglichen Festigkeitswerte des Materials des Rohlings 10 zu erwarten wäre.

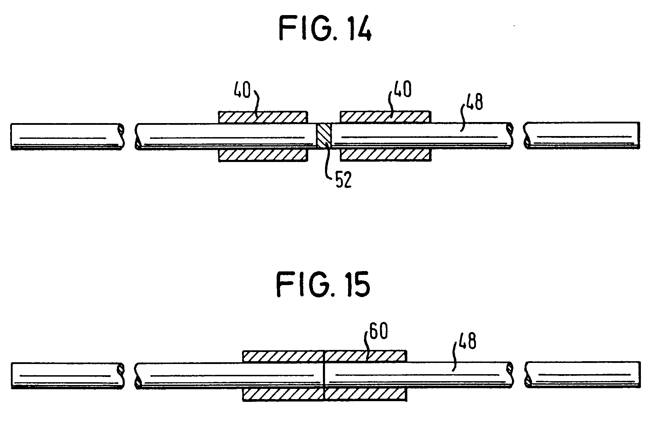

In Fig. 14 ist eine vorteilhafte Ausgestaltung des erfindungsgemäßen Verfahrens gemäß der zweiten und der dritten Ausführungsform dargestellt. Auf einen einzigen Zugseilabschnitt 48 könen gleichzeitig zwei Preßteile aufgepreßt werden, beispielsweise Befestigungsteile 40. Anschließend wird der Zugseilabschnitt 48 durch einen Trennbearbeitungsschritt im markierten Bereich 52 in zwei Teile unterteilt, die jeweils mit einem Preßteil versehen sind.

In Fig. 15 ist eine weitere vorteilhafte Ausgestaltung eines erfindungsgemäßen Verfahrens gemäß der zweiten und der dritten Ausführungsform dargestellt. Bei dieser Ausführungsform wird auf einem Zugseilabschnitt 48 ein aus zwei Abschnitten bestehendes zusammenhängendes Preßteil 60 aufgepreßt, das in einem nachfolgenden Trennschritt zusammen mit dem Zugseilabschnitt 48 in zwei Teile getrennt wird, beispielsweise zwei Befestigungsteile. Auf diese Weise lassen sich die zur Herstellung des mit einem Preßteil versehenen Zugseils notwendigen Arbeitsschritte weiter vermindern.

## Patentansprüche

1. Verfahren zum Herstellen von Preßteilen (12; 13; 40; 60) für Fahrzeuginsassen-Rückhaltesysteme, bei dem ein durch Ablängen eines Rohres erhaltener Rohling (10) in eine Presse (14) eingelegt und in mindestens einem Preßschritt in die gewünschte Form gepreßt wird.

2. Verfahren nach Anspruch 1, dadurch gekennzeichnet, daß vor dem Pressen des Rohlings ein Zugseil (30; 48) in diesen eingelegt wird.

3. Verfahren nach einem der vorhergehenden Ansprüche, dadurch gekennzeichnet, daß das Preßteil ein Befestigungsteil (40; 60) zum Befestigen des Zugseils (30; 48) ist.

4. Verfahren nach Anspruch 3, dadurch gekennzeichnet, daß am Befestigungsteil zwei Anschlußlaschen (42) gebildet werden.

5. Verfahren nach Anspruch 4, dadurch gekennzeichnet, daß die Anschlußlaschen (42) mit jeweils einer Bohrung (44) versehen werden.

6. Verfahren nach einem der Ansprüche 1 und 2, dadurch gekennzeichnet, daß das Preßteil ein Kolben (12) für einen Linearantrieb ist.

7. Verfahren nach einem der Ansprüche 1 und 2, dadurch gekennzeichnet, daß das Preßteil eine Anschlaghülse (13) für einen Kolben eines Linearantriebs ist.

8. Verfahren nach Anspruch 2, dadurch gekennzeichnet, daß das Ende des Zugseils (30; 48) über das Preßteil (12; 13; 40; 60) hinausragt.

9. Verfahren nach Anspruch 2, dadurch gekennzeichnet, daß die Haltekraft des Preßteils (12; 13; 40; 60) auf dem Zugseil (30; 48) überprüft wird.

10. Verfahren nach Anspruch 9, dadurch gekennzeichnet, daß die Haltekraft des Preßteils (12; 13; 40; 60) auf dem Zugseil (30) vor dem Entnehmen aus der Presse (14) überprüft wird.

11. Verfahren nach Anspruch 2, dadurch gekennzeichnet, daß die Festigkeit des Materials des Rohlings (10) kleiner als die Festigkeit des Materials des Zugseils (30) ist.

12. Verfahren nach einem der vorhergehenden Ansprüche, dadurch gekennzeichnet, daß bei der Bemessung des Materialquerschnitts des Rohlings (10) die bei der Umformung des Rohlings (10) auftretende Kaltverfestigung des Materials berücksichtigt wird.

13. Verfahren nach einem der vorhergehenden Ansprüche, dadurch gekennzeichnet, daß das Rohr aus einer Aluminiumlegierung besteht.

14. Verfahren nach einem der Ansprüche 1 bis 12, dadurch gekennzeichnet, daß das Rohr aus einem Stahl besteht, der einen hohen Umformungsgrad ermöglicht.

15. Verfahren nach Anspruch 14, dadurch gekennzeichnet, daß der Rohling (10) nach dem Verpressen vergütet wird.

16. Verfahren nach Anspruch 14, dadurch gekennzeichnet, daß ein Rohr aus vergütetem Material verwendet wird.

17. Verfahren nach einem der Ansprüche 14 bis 16, dadurch gekennzeichnet, daß der Rohling (10) verzinkt wird.

18. Verfahren nach einem der vorhergehenden Ansprüche, dadurch gekennzeichnet, daß der Rohling (10) kaltverformt wird.

19. Verfahren nach einem der Ansprüche 1 bis 17, dadurch gekennzeichnet, daß der Rohling (10) warmverformt wird.

20. Verfahren nach einem der vorhergehenden Ansprüche, dadurch gekennzeichnet, daß der Rohling (10) in zwei zusammenhängende Preßteile (60) umgeformt wird, die anschließend auseinandergeschnitten werden.

21. Verfahren nach einem der vorhergehenden Ansprüche, dadurch gekennzeichnet, daß der Rohling (10) durch Zusammenfahren eines Stempels (18) und einer Matrize (16) entlang der Längsrichtung des Rohlings umgeformt wird.

22. Verfahren nach einem der vorhergehenden Ansprüche, dadurch gekennzeichnet, daß das Zusammenfahren von Stempel (18) und Matrize (16) weggesteuert erfolgt.

23. Verfahren nach einem der Ansprüche 1 bis 21, dadurch gekennzeichnet, daß das Zusammenfahren von Stempel (18) und Matrize (16) kraftgesteuert erfolgt.

24. Verfahren nach einem der vorhergehenden Ansprüche, dadurch gekennzeichnet, daß das Preßteil (12; 13; 40; 60) mittels eines Auswerfers (20) von der Matrize (16) gelöst wird.

25. Verfahren nach einem der vorhergehenden Ansprüche, dadurch gekennzeichnet, daß das Preßteil (12; 13; 40; 50; 60) mittels eines Auswerferringes (28) von dem Stempel gelöst wird.

26. Verfahren nach einem der vorhergehenden Ansprüche, dadurch gekennzeichnet, daß genau ein Preßschritt durchgeführt wird.

27. Verfahren nach einem der vorhergehenden Ansprüche, dadurch gekennzeichnet, daß das Rohr von einer Vorratsrolle entnommen wird.

28. Vorrichtung zum Ausführen eines Verfahrens nach einem der Ansprüche 2 bis 27, dadurch gekennzeichnet, daß sie eine Zufuhrvorrichtung für einen rohrförmigen Rohling (10) und für ein Zugseil (30) bat, auf das der Rohling (10) aufgepreßt wird.
